# EUROPEAN PATENT APPLICATION

(11) **EP 4 328 658 A1**
(43) Date of publication of application: **28.02.2024**
(21) Application number: 22192436.8
(22) Date of filing: 26.08.2022
(51) Int. Cl.: G02C 7/02

(54) **SPECTACLE LENS DESIGN AND METHODS TO RETARD AND CONTROL THE PROGRESSION OF MYOPIA**

(71) Applicant: Carl Zeiss Vision International GmbH, 73430 Aalen (DE)
(72) Inventor: Ohlendorf, Arne, 72074 Tübingen (DE)
(74) Representative: Carl Zeiss AG - Patentabteilung

(57) **Abstract**

The invention is directed to a spectacle lens including a first zone having a first focal power and a second zone having at least one of the following features:
(i) one or a plurality of focusing structures providing a second focal power greater than the first focal power;
(ii) diffusing structures leading to a diffusion of light passing the second zone;
being characterized by either or both of:
(a) a third zone between and directly adjacent to the first zone and the second zone, wherein the third zone contains at least one of the following:
(i) focusing structures providing a third focal power, whereby if said second zone comprising said focusing structures an average focal power of said focusing structures of said second zone differs from an average focal power of said focusing structures of said third zone;
(ii) diffusing structures leading to a diffusion of light passing the third zone, whereby if said second zone comprising said diffusing structures said diffusing structures of said second zone differ from said diffusing structures of said third zone;

(b) said first zone and said second zone being strip-shaped having linear edges, defining respective first and second widths.

The invention is also directed to a kit, a data set, a computer-implemented method, a computer program and a manufacturing method.

## Description

### Field of invention

The present invention relates to a spectacle lens according to the preamble of claim 1, kits according to the preambles of claims 8 and 9, a data set according to the preamble of claim 10, a computer-implemented method of designing a spectacle lens according to the preamble of claim 11, a computer program according to the preamble of claim 12, and a method of manufacturing a spectacle lens according to the preamble of claim 13.

The prevalence of myopia (short sightedness) is increasing rapidly. Myopia significantly increases the risk of retinal detachment, (depending on the level of myopia), posterior cataract and glaucoma. The optical, visual and potential pathological effects of myopia and its consequent inconvenience and cost to the individual and community, makes it desirable to have effective strategies to slow the progress, or prevent or delay the onset of myopia, or limit the amount of myopia occurring in both children and young adults.

### Related art

WO 2010/075319 A2 refers to the importance of peripheral retinal image determining myopic eye growth. The document proposes a therapeutic treatment method for preventing, ameliorating, or reversing eye-length related disorders. The therapeutic treatment method comprises the following steps: identifying, in a patient, an eye-length-related disorder; and inducing artificial blurring of the patient's peripheral vision in order to decrease an average spatial frequency of images input to the retina of the eye past a threshold spatial frequency to inhibit further lengthening of the patient's eye. In particular, the document proposes providing the patient with spectacle lenses having a zone including a plurality of elements selected from the group consisting of: (i) bumps on a surface of the spectacle lens; (ii) depressions on the surface of the spectacle lens; (iii) first translucent inclusions in a spectacle lens material; and (iv) first transparent inclusions in the spectacle lens material, whereby the first transparent inclusions having a refractive index different from that of the spectacle lens material. The elements in general are point-shaped elements having a non-zero point density in a range between 0 and 8 dots per mm2. The spectacle lens has another zone that is surrounded by the zone including said plurality of elements and that provides clear vision.

WO 2018/026697 A1 discloses spectacles comprising a frame and a pair of spectacle lenses mounted in the frame. The spectacle lenses comprising a point pattern distributed across each spectacle lens. The point pattern comprises an array of dots spaced apart by a distance of 1 mm or less. Each point has a maximum dimension of 0.3 mm or less.

WO 2019/152438 A1 discloses a spectacle lens comprising a lens material having two opposing curved surfaces and a scattering region surrounding a clear aperture. The scattering region has a plurality of spaced apart scattering centers sized and shaped to scatter incident light. The scattering centers being are arranged in a pattern that includes an irregular variation in spacing between adjacent scattering centers and/or an irregular variation in scattering centers size.

Myopia-reducing spectacles such as they are for example disclosed in WO 2019/152438 A1 are composed of a spectacle frame and spectacle lenses mounted in the spectacle frame. Generally, the spectacle lenses can be piano lenses, single vision lenses (e.g., with positive or negative power) or multivision lenses (e.g., bifocals or progressive lenses). The spectacle lenses each have a clear zone surrounded by a zone providing a reduced contrast. The clear zones are positioned to coincide with the wearer's on-axis viewing position, while the zones providing the reduced contrast correspond to the wearer's peripheral vision. The zones providing the reduced contrast are composed of an array of dots which reduce the contrast of an object in the wearer's peripheral vision by scattering light passing through those zones to the wearer's eye. In general, dots can be provided by forming protrusions and/or recesses on one or both surfaces of a spectacle lens and/or by forming scattering inclusions in the lens material itself in these zones.

WO 2020/014613 A1 assigned to Sightglass Vision Inc. discloses a myopia control spectacle lens that may contain one or more defocus elements. A myopia control spectacle lens described therein may contain a clear center zone, free of said defocus elements. Exemplarily, the document refers to regions that comprise island-shaped lenses.

Some wearers of spectacle lenses having a central clear zone surrounded by a zone providing a reduced-contrast as disclosed in WO 2019/152438 A1 or by a zone with microlenses/lenslets as disclosed in WO 2019/206569 A1 report of some kind of discomfort in use.

Hong Kong Polytechnic University and Hoya disclosed spectacle lenses of similar structure in US 2017/131567 A1, namely those having bumps on a surface of the spectacle lens. These spectacle lenses are known as MSMD (multi segment myopic defocus) lenses. The respective technical concept is known as D.I.M.S. (Defocus Incorporated Multiple Segments) technology. Details are, for example, disclosed under https://www.hoyavision.com/en-hk/discover-products/for-spectacle-wearers/special-lenses/myosmart/. Embodiments of these spectacle lenses shall suppress the progress of myopia while correcting myopia. A spectacle lens of such an embodiment shown in US 2017/131567 A1 is a meniscus concave lens with a front surface formed as a convex curved surface that is curved toward an object side and a back surface formed into a concave surface having a larger curvature than the curvature of the front surface. In addition, the spectacle lens has a first zone in the center of the spectacle lens. The first zone has a first refractive power based on a prescription for correcting myopia and a second zone that surrounds the first zone and includes a plurality of respectively independent island-shaped areas.

The front surface of each of the island-shaped areas in the second zone is formed into a convex spherical surface shape toward the object side having a larger curvature than the curvature of the front surface of the first zone. Thus, the refractive power of the independent island-shaped areas in the second zone is larger than the refractive power of the first zone by 2.00 D to 5.00 D. Accordingly, an image being focused on a retina of an eye by the first zone is focused on a point in front of the retina by the island-shaped areas in the second zone.

Each island-shaped area covers about 0.50 to 3.14 mm² of the spectacle lens and has a circular shape having a diameter of about 0.8 to 2.0 mm. The plurality of island-shaped areas is approximately evenly arranged in the vicinity of the first zone in a way to be separated from each other by a distance almost equal to a value of a radius of an of island-shaped area.

A similar approach is used in Essilor's Stellest spectacle lenses being described in detail in EP 3 553 594 A1, EP 3 561 578 A1, WO 2019/166653 A1, WO 2019/166654 A1, WO 2019/166655 A1, WO 2019/166657 A1, WO 2019/166659 A1 and WO 2019/206569 A1, respectively. The spectacle lenses described therein comprise microlenses/lenslets which are aspherical and have an optical power in their geometric center which lies in the range between 2.0 D and 7.0 D in absolute value, and an optical power in their periphery which lies in the range between 1.5 D and 6.0 D in absolute value. The refractive optical power provided by the aspherical microlenses/lenslets exceeds the refractive power of a clear central zone of the spectacle lenses by 0.5 D or more.

US 2017/131567 A1, a closest prior art from which the invention proceeds, discloses a spectacle lens with a non-gradient change of focal power between the clear aperture and the peripheral zone. Moreover, the focal structures in the peripheral zone are positioned very close to each other compared to the size of the focal structures. Hence, the spectacle lens is optimized for a high level of myopia control function. This leads to a relative low comfort of wearing compared to the state of the art. In other words, to achieve a high level of myopia control function the comfort of wearing is reduced.

JP 2020/030390 A2, another closest prior art document, from which the invention proceeds discloses a spectacle lens having a visual acuity correction function. The central portion is configured to correct the user's visual acuity, that is, to be in an emmetropic state. The peripheral portions can be configured so that it does not correct or become emmetropic. Some embodiments show that the peripheral portions comprise strip-shaped areas instead of a clear aperture being surrounded by focusing or diffusing structures. JP 2020/030390 A2 discloses a clear zone of the spectacle lens which is large compared to the total size of the spectacle lens. Hence, the spectacle lens is optimized for a high comfort of wearing. This leads to a relatively small zone for retarding and controlling the progression of myopia compared to the total size of the spectacle lens. In other words, to achieve a high comfort of wearing the level of myopia control function is reduced.

### Problem to be solved

It is therefore an objective of the present invention, in particular in view of US 2017/131567 A1 and JP 2020/030390 A2, to provide a spectacle lens, kits, a data set, a computer-implemented method of designing a spectacle lens, a computer program and a method of manufacturing a spectacle lens for retarding the progression of myopia with a well balance between a noticeable myopia control function and a sufficient comfort of wearing.

### Summary of the invention

This problem is solved by a spectacle lens according to the characterizing portion of claim 1, kits according to the characterizing portions of claims 8 and 9, a data set according to the characterizing portion of claim 10, a computer-implemented method of designing a spectacle lens according to the characterizing portion of claim 11, a computer program according to a characterizing portion of claim 12 and a method of manufacturing a spectacle lens according to a characterizing portion of claim 13. Preferred embodiments, which can be implemented in an isolated fashion or in any arbitrary combination, are listed in the dependent claims or throughout the following description.

In a first aspect, the present invention relates to a spectacle lens comprising a first zone having a first focal power and a second zone having at least one of the following features:
(i) one or a plurality of focusing structures providing a second focal power greater than the first focal power;
(ii) diffusing structures leading to a diffusion of light passing the second zone.

The inventive spectacle lens includes at least one of the following two features (a) and/or (b), namely:
(a) in a first variant the spectacle lens includes a third zone between and directly adjacent to the first zone and the second zone, wherein the third zone contains at least one of the following:
   (i) focusing structures providing a third focal power, whereby if said second zone comprising said focusing structures an average focal power of said focusing structures of said second zone differs from an average focal power of said focusing structures of said third zone;
   (ii) diffusing structures leading to a diffusion of light passing the third zone, whereby if said second zone comprising said diffusing structures said diffusing structures of said second zone differ from said diffusing structures of said third zone;
(b) in a second variant said first zone and said second zone of said spectacle lens is strip-shaped having linear edges, whereby said linear edges of said first zone defining a first width and said linear edges of said second zone defining a second width, whereby a variation of said first width and a variation of said second width being less than at least one of the variations of the group consisting of:
   (i) the variation of said first width is less than 5 % and the variation of said second width is less than 5 %;
   (ii) the variation of said first width is less than 3 % and the variation of said second width is less than 3 %;
   (iii) the variation of said first width is less than 2 % and the variation of said second width is less than 2 %.

As generally used, the term "spectacle lens" refers to an ophthalmic lens worn in front of, but not in contact with, the eyeball (DIN ISO 13666:2019, section 3.5.2), where an ophthalmic lens is a lens intended to be used for purposes of measurement, correction and/or protection of the eye, or for changing its appearance (DIN ISO 10 13666:2019, section 3.5.1).

In the present invention, the term "zone" is used in the context of a spectacle lens to denominate a portion of the spectacle lens which represents an area of the spectacle lens which is smaller than the total area of the spectacle lens.

The term "first zone" refers in the context of the present invention to a clear zone of a spectacle lens that provides neither a myopic defocus nor a diffusion in foveal vision. Furthermore, a first zone allows for achieving, if necessary, assisted by accommodation, a focused image on the fovea. The term "fovea" refers to the fovea centralis, which is a central pit of the retina with densely packed photoreceptor cells.

As generally used, the term "focal power" is a collective term for the spherical vertex power, which brings a paraxial pencil of parallel light to a single focus (and which is usually considered in the prescription by the "sphere" value or, abbreviated, "sph", and the cylindrical vertex power of a spectacle lens, which brings a paraxial pencil of parallel light to two separate line foci mutually at right angles (DIN ISO 13666:2019, section 3.10.2) and which is usually considered in the prescription by the "cylinder" value or, abbreviated, "cyl". The "vertex power" is the reciprocal of the paraxial vertex focal length (DIN ISO 13666:2019, section 3.10.7).

The term "prescription" denotes a summary in which the dioptric powers necessary for correcting a diagnosed refractive error are specified in the form of suitable values. In the case of spherical power, the prescription may contain a value "sph" for sphere. In the case of astigmatic power, the prescription can contain values "cyl" for cylinder and "axis" for axis, and, in the case of prismatic power, the prescription can contain prism and base values. Moreover, the prescription may contain further values, for example the "add" value in the case of multifocal spectacle lenses, said "add" value specifying the difference between the vertex power in the near portion of the spectacle lens and in the distance portion of the spectacle lens.

The term "second zone" refers in the context of the present invention to an area of a spectacle lens that provides a myopic defocus or a diffusion in foveal vision. Furthermore, a second zone does not allow for achieving a focused image on the fovea.

For the inventive spectacle lens, the first zone represents a clear area having a first focal power that is preferably based on a prescription for correcting an abnormal refraction of an eye. The second zone contains one or a plurality of focusing structures and/or diffusing structures.

As generally used, the term "focusing structures" applies to structures providing a focal power in addition to the first focal power. With particular regard to the present invention, such focusing structures may comprise a microlens, a lenslet, a bump or a stripe.

The term "myopic defocus" refers to a situation in which light focuses in front of the fovea by such a distance that a focused image on the fovea cannot be achieved, even when assisted by accommodation.

As generally used, the term "diffusing structures" means any structure providing diffusing properties to the respective area of the spectacle lens. Diffusing structures constitute an optical element that is made of any material that diffuses or scatters light in some manner to transmit soft light. With particular regard to the present invention, the diffusing structures each changing an average transferred contrast for the wearer.

The term "transferred contrast" describes in context of the present invention the ratio of the contrast of an image to the contrast of a corresponding object. The term "average transferred contrast" describes in context of the present invention the average transferred contrast of multiple diffusing structures of a zone of an optical element, such as a second zone or a third zone of a spectacle lens. If a wearer looks through a first zone having an "average transferred contrast" of 1.0, the wearer will recognize every detail of the observed object. If a wearer looks through a second zone or a third zone having an "average transferred contrast" of 0.9 the wearer will recognize less details (in this case 90%) of the observed object compared to as he would look through the first zone. In this example the average transferred contrast is reduced if the wearer looks through the second zone or the third zone. If a second zone or third zone has three different diffusing structures with three different transferred contrasts of 0.2, 0.7 and 0.9, the average transferred contrast of the second zone or third zone would be, in context of the present invention, the arithmetic average of the three different transferred contrasts. In this case the average transferred contrast of the second zone or the third zone would be 0.6.

With the inventive lens according to variant (a) of claim 1, which includes a third zone between and directly adjacent to the first zone and the second zone, a wearer of the spectacle lens is not or at least less disturbed by the second zone of the spectacle lens appearing blurred. The third zone ensures that the change of the myopic defocus and/or the change of the average transferred contrast from the first zone to the second zone is smoothed. Hence, the discomfort for the wearer of wearing myopia reducing spectacle lenses based on the inventive concept is reduced compared to myopia reducing spectacle lenses according to the state of the art while the myopia progression controlling functionality is maintained.

The term "third zone" refers in the context of the present invention to an area of the spectacle lens that provides a myopic defocus or a diffusion in foveal and parafoveal vision when a wearer looks through the third zone. Furthermore, the third zone does not allow for achieving a focused image on the fovea. The term "adjacent" refers to an arrangement of zones, e. g. the first zone and the second zone, that are in contact to each other at least section wise. With particular regard to the present invention, every spatial combination of the first zone, the second zone and the third zone is comprised.

With the inventive lens according to variant (b) of claim 1, which includes a first zone being strip-shaped having linear edges and a second zone being strip-shaped having linear edges, said inventive lens, enables a manufacturing of the spectacle lens within feasible manufacturing tolerances. Hence the balance between the comfort of wearing and the myopia control function, manufactured within feasible manufacturing tolerances, based on the inventive concept is optimized compared to myopia reducing spectacle lenses according to the state of the art.

The term "strip-shaped" refers to the contour of a zone, e. g. the first zone and/or the second zone and/or the third zone. With particular regard to the present invention a strip-shaped zone comprises a variation of the width or the height within certain manufacturing tolerances. The variation of the zone width or the variation of the zone height in respect to this invention is relatively low. Hence, a zone width or a zone height appears constant along the full width or the full height of a zone and can be therefore regarded as strip-shaped. The variation of the first width of the first zone and/or the variation of the second width of the second zone and/or the variation of the third width of the third zone can vary within a tolerance interval of 0.0 % to 5.0 %. For example, the second zone comprises at the top end of the zone a second width of 10.0 mm. At the bottom end of the second zone, the second width is equal to 10.5 mm. The variation of the second width along the full width of the second zone is 5.0 %. Hence, the second zone mentioned in the example can be regarded as strip-shaped within the scope of the present invention.

The term "linear edges" refers to the shape of the edges of a strip-shaped zone. With particular regard to the present invention a strip-shaped zone with linear edges refers to a zone with edges which are running in a straight line and not in a curved or bent line.

In a particularly preferred embodiment of the inventive spectacle lens, the second zone and/or the third zone, is comprised by the front surface and/or the back surface of the spectacle lens. Hence, the focusing structures providing a focal power, resulting in a myopic defocus are positioned on the front surface and/or the back surface of the spectacle lens and/or the diffusing structures leading to a diffusion of light, resulting in a reduction of average transferred contrast, are positioned on the front surface and/or the back surface of the spectacle lens.

In other words, the geometry of the surface of either the front or the back surface or both is designed such that it provides the focusing and/or the diffusing properties. Alternatively, the bulk material of the spectacle lens may comprise a refractive index distribution providing the focusing and/or diffusing properties. Another variant of the invention consists in that, that both bulk properties as well as the surface geometries are designed such to provide said optical properties.

In a particularly preferred embodiment of the inventive spectacle lens, an area of the second zone and/or in case of a spectacle lens comprising a third zone, an area of the third zone covers at least 5.0 % of an area of the spectacle lens. The term "area of the second zone" and the term "area of the third zone" refer to a spatial area of the spectacle lens on which the average optical effect of a zone is generated by the focusing structures and/or the diffusing structures of said zone. The term "area of the spectacle lens" refers to all areas of all zones, including the first zones, the second zones and the third zones.

The area of the second zone and the area of the third zone is defined by at least two borderlines, an inner borderline and an outer borderline. In case of a striped-shaped second zone or a striped-shaped third zone the area of the second zone or the area of the third zone can be additionally restricted by an outer edge of the spectacle lens and/or a straight line connecting the inner borderline with the outer borderline.

The term "borderline" refers to a virtual line or a physical line which defines a border between two zones. For example, between a first zone and a second zone, between a first zone and a third zone or between a second zone and a third zone. The position of the inner borderline differs from the position of the outer borderline in respect to the distance towards the center of the spectacle lens. The inner borderline is closer located towards the center of the spectacle lens compared to the outer borderline. The inner borderline or the outer borderline of said area is defined by at least two inner onsets or at least two outer onsets.

The term "onset" represents the first measurable position of a focusing structure or diffusing structure on a surface of a spectacle lens. In other words, the term "onset" represents a position on the surface of the spectacle lens on which the surface shape starts to deviate from the shape of the base lens surface in case of the focusing structures or on which the contrast-reducing properties of the lens change with respect to the base lens in case of the diffusing structures.

Further, the term "inner onset" specifies the onset on the side of a focusing structure or a diffusing structure towards the center of the lens and the term "outer onset" specifies the onset of the focusing structure or a diffusing structure away from the lens towards the periphery.

Two inner onsets with an equal distance to the center of the lens, said distance being the nearest for a focusing structure or a diffusing structure, defining the inner borderline by connecting these inner onsets. Two outer onsets with an equal distance to the center of the lens, said distance being the farthest for a focusing structure or a diffusing structure, defining the outer borderline by connecting this outer onsets.

The term "center of the spectacle lens" refers to the optical center (DIN ISO 13666:2019, section 3.2.15) or the fitting point (DIN ISO 13666:2019, section 3.2.34) of a lens. The term "optical center" refers to the intersection of the optical axis (DIN ISO 13666:2019, section 3.1.8) with the front surface of a lens. The term "optical axis" describes a straight line joining the centres of curvature of both surfaces of a lens. In other words, a skiled person can obtain the optical center of a lens - for a lens without a prismatic prescription - by searching for a point on a surface of the lens with a prismatic power equal to zero. The term "fitting point" refers to a point on the front surface of a lens or blank stipulated by the manufacturer for positioning the lens in front of the eye.

Moreover, the term "center of the spectacle lens" may also refer to a horizontal line and vertical line, which are perpendicular to each other and cross each other at the optical center or the fitting point of the lens.

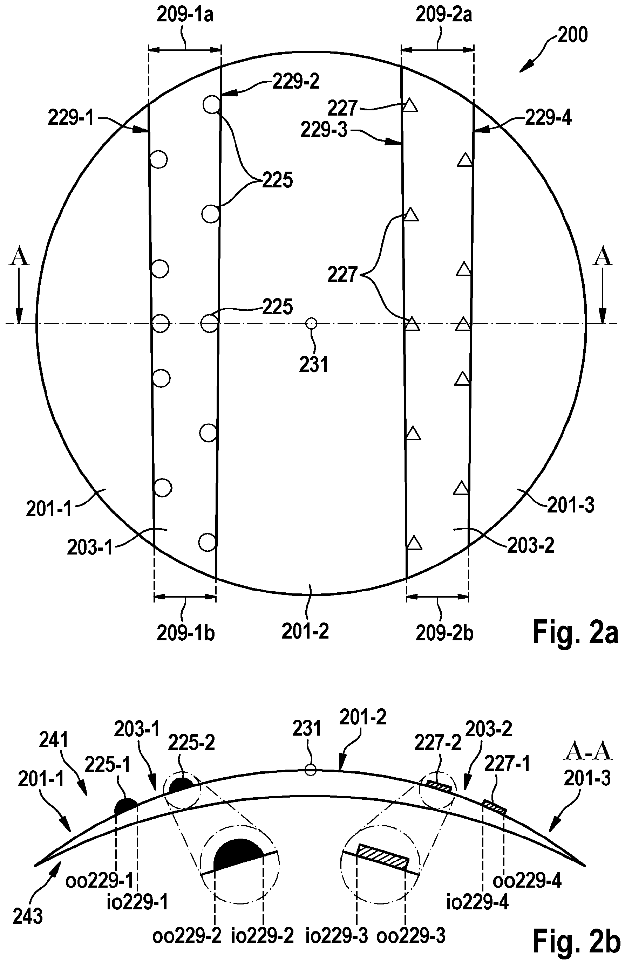

Exemplary embodiments of determining the area of a second zone are shown in Figures 2a and 2b.

If the area of the second zone and/or the area of the third zone covers at least 5.0 % of the area of the spectacle lens, the myopia progression controlling functionality can be maintained. In particular, if the area of the second and/or the area of the third zone covers between 5.0 % - 50.0 % of the area of spectacle lens, the myopia progression controlling functionality will be maintained even better. If the area of the second zone and/or the area of the third zone covers more than 50.0 % of the area of the spectacle lens, the myopia progression controlling functionality cannot be maintained anymore. Instead, the myopia progression might increase.

In a particularly preferred embodiment of the inventive spectacle lens, the focusing structures and/or the diffusing structures of the second zone and/or in case of the spectacle lens comprising the third zone, the focusing and/or diffusing structurescover at least 5% of the area of said second zone and/or said third zone. If at least 5% of the second and/or of the third zone are covered by the focusing structures and/or the diffusing structures, the discomfort of wearing myopia reducing spectacle lenses based on the inventive spectacle lens is reduced to a minimum as compared to myopia reducing spectacle lenses according to the state of the art, while the myopia progression controlling functionality is maintained. In particular, if the focusing structures and/or the diffusing structures of the second zone and/or of the third zone cover between 5 % - 80 % of the area of the second zone and/or of the third zone, a balance between discomfort of wearing myopia reducing spectacle lenses based on the inventive spectacle lens and myopia progression controlling functionality is obtained.

In a particularly preferred embodiment of the inventive spectacle lens, the first width of the first zone comprises a value out of a value range of 0.75 mm to 24.0 mm, preferably between 1.5 mm to 8.0 mm, more preferably between 3.0 mm to 16.0 mm and in particular between 4.5 mm and 24.0 mm. The second width of the second zone comprises a value out of a value range of 0.0375 mm to 12.0 mm, preferably 0.075 mm to 4.0 mm, more preferably between 0.15 mm to 8.0 mm and in particular between 0.225 mm and 12.0 mm. In the case of a spectacle lens comprising a third zone, the third zone having a third width, wherein the third width of the third zone comprises a value out of a value range of 0.0375 mm to 12.0 mm preferably 0.075 mm to 4.0 mm, more preferably between 0.15 mm to 8.0 mm and in particular between 0.225 mm and 12.0 mm. With the inventive lens including the first width of the first zone comprises a value out of a value range of 0.75 mm to 24.0 mm and the second width of the second zone comprises a value out of a value range of 0.0375 mm to 12.0 mm and/or the third zone having a third width, wherein the third width of the third zone comprises a value out of a value range of 0.0375 mm to 12.0 mm, the myopia progression controlling functionality can be maintained for different wearing situations.

The value range of 0.75 mm to 24.0 mm of the first zone is based on a minimum pupil size of 1.5 mm (for an high amount of light passing the human eye) and a maximum pupil size of 8.0 mm (for a low amount of light passing the human eye). The lower limit of the value range is based on the assumption that the myopia progression controlling functionality can be still maintained if the width of the first zone corresponds to at least 50% of the minimum pupil size, which is equal to 0.75 mm. The upper limit of the value range is based on the assumption that the myopia progression controlling functionality can be still maintained if the width of the first zone corresponds to 3 times of the maximum pupil size, which is equal to 24.0 mm.

The value range of 0.0375 mm to 12.0 mm of the second zone is based on a minimum pupil size of 1.5 mm (for an high amount of light passing the human eye) and a maximum pupil size of 8.0 mm (for a low amount of light passing the human eye). The lower limit of the value range is based on the assumption that the myopia progression controlling functionality can be still maintained if the width of the first zone corresponds to at least 50% of the minimum pupil size and the width of the second zone corresponds at least to 5% of the width of the first zone, which is equal to 0.0375 mm. The upper limit of the value range is based on the assumption that the myopia progression controlling functionality can be still maintained if the width of the first zone corresponds to 3 times the maximum pupil size and the width of the second zone corresponds to maximum 50% of the first zone, which is equal to 12.0 mm.

The value range of 0.0375 mm to 12.0 mm of the third zone is based on a minimum pupil size of 1.5 mm (for an high amount of light passing the human eye) and a maximum pupil size of 8.0 mm (for a low amount of light passing the human eye). The lower limit of the value range is based on the assumption that the myopia progression controlling functionality can be still maintained if the width of the first zone corresponds to at least 50% of the minimum pupil size and the width of the third zone corresponds at least to 5% of the width of the first zone, which is equal to 0.0375 mm. The upper limit of the value range is based on the assumption that the myopia progression controlling functionality can be still maintained if the width of the first zone corresponds to 3 times the maximum pupil size and the width of the third zone corresponds to maximum 50% of the width of the first zone, which is equal to 12.0 mm.

In a particularly preferred embodiment of the inventive spectacle lens, (i) a fitting point being located on the first zone or (ii) an optical center of the spectacle lens being located on the first zone. The term "optical center" (DIN ISO 13666:2019, section 3.2.15) refers to the intersection of the optical axis (DIN ISO 13666:2019, section 3.1.8) with the front surface of a lens. The term "optical axis" describes a straight line joining the centres of curvature of both surfaces of a lens. In other words, a skiled person can obtain the optical center of a lens - for a lens without a prismatic prescription - by searching for a point on a surface of the lens with a prismatic power equal to zero. The term "fitting point" (DIN ISO 13666:2019, section 3.2.34) refers to a point on the front surface of a lens or blank stipulated by the manufacturer for positioning the lens in front of the eye.

With the fitting point or the optical center being located at the first zone, the inventive spectacle lens ensures that the wearer does not perceive any kind of eyestrain if the wearer looks according to a given visual task through a spectacle lens. The first zone, where the fitting point or the optical center is located, comprises a first width in a value range of 0.75 mm to 24.0 mm, preferably 5.0 mm to 12.0 mm, more preferably between 7.0 mm to 10.0 mm. In particular the first width of said first zone is about 9.0 mm to maximize the comfort of wearing.

In a particularly preferred embodiment of the inventive principle, the linear edges of the first zone and the second zone are oriented at an orientation angle to a predefined horizontal of the spectacle lens. Hence, the spectacle lens comprising between the first zone and the second zone an oblique orientation. The term "oblique orientation" refers to an orientation angle between 0° to 90° between the first zone and the second zone. The term "orientation angle" defines the angle of orientation between said two zones relative to a horizontal of the spectacle lens. The term "horizontal of the spectacle lens" refers to visible or non-visible horizontal line of a spectacle lens. The lens can be centered in a spectacle frame. This line may be a horizontal part of an permanent engraving of the spectacle lens or said horizontal line through the center of the spectacle lens.

For example, the lower limit of the oblique orientation between the first zone and the second zone corresponds to an orientation angle of 0° which is synonymous with a perfectly horizontal orientation between the first zone and the second zone. The upper limit of the oblique orientation between the first zone and the second zone corresponds to an orientation angle of 90° which is synonymous with a perfectly vertical orientation between the first zone and the second zone.

Preferably the value range of the oblique orientation between the first zone and the second zone comprises values between 5° to 85°, more preferably between 25° to 65° and in particular between 35° to 55°. With the inventive lens principle, including an oblique orientation between the first zone and the second zone, a wearer can look through the first zone depending on the wearers standard eye movement, which results in a high wearing comfort for the wearer. A typical eye movement of a wearer comprises a vertical eye movement towards the upper part of a spectacle lens and a nasal eye movement towards the lower part of a spectacle lens. If a suitable oblique orientation (e.q. 45°) for the wearer between the first zone and the second zone is chosen, the wearer will always look through the first zone of the spectacle lens. Hence, the wearer will perceive less eyestrain compared to spectacle lenses known from the state of the art.

In a particularly preferred embodiment of the spectacle lens said first focal power comprises a value out of a value range of -15.0 D to +2.0 D, preferably -10.0 D to +2.0 D, more preferably -5.0 D to +2.0 D and in particular -2.0 D to +2.0 D. In the case that the prescription for a wearer contains only a value "sph" for sphere the first focal power represents a spherical power of a spectacle lens. In the case that the prescription for a wearer contains the values "cyl" for cylinder and "axis" for axis the at least one first focal power represents an astigmatic power of a spectacle lens.

If said first focal power comprises a value out of a value range of -15.0 D to +2.0 D, the number of potential wearers to enable for the myopia progression controlling functionality is increased. Especially the high amount of myopic eye glass wearer in Asia represents the need of correction for high myopic values.

Moreover, the second focal power of the second zone and the third focal power of the third zone comprising a focal power value which differs in respect to the first focal power out of a value range of +0.5 D to +5.0 D, preferably +0.5 D to +2.0 D, more preferably +2.0 D to +3.5 D and in particular +3.5 D to +4.0 D.

If said second focal power and said third focal power differs in respect to the first focal power out of a value range of +0.5 D to +5.0 D, a blur to the eyes of the wearer of the spectacle lens is provided. Said blur increases the myopia progression controlling functionality in respect to myopia controlling lenses known from the state of the art.

In a particularly preferred embodiment of the spectacle lens the first focal power of the first zone is designed such that it corrects a myopic refractive error of the wearer of the spectacle lens being positioned according to the as-worn position completely or partially.

The first focal power is adjusted in the design calculation process such that the myopia of the wearer is corrected within an accuracy interval out of a value range of -0.75 D to +0.75 D, preferably -0.5 D to +0.5 D, more preferably -0.25 D to +0.25 D and in particular -0.35 D to +0.35 D. The level of comfort of a wearer is adjusted to the sensitivity of the wearers eyes and the myopia progression controlling functionality is increased in respect to myopia controlling lenses known from the state of the art.

The first aspect of the invention is fully solved by a spectacle lens design of the above described type.

In a second aspect, the present invention relates to a kit comprising the spectacle lens according to the first aspect of the present invention and instructions for use including an as-worn position of the spectacle lens. The inventive kit comprises the linear edges of the first zone and the second zone are oriented at an orientation angle to a horizontal when the spectacle lens is positioned according to the as-worn position.

The term "as-worn position" refers to the position, including orientation, of the spectacle lenses relative to the eyes and face during wear (DIN ISO 13666:2019, section 3.2.36). The as-worn position is determined by the as-worn pantoscopic angle, the as-worn face form angle and the vertex distance. The as-worn pantoscopic angle is the vertical angle between the horizontal and the perpendicular to a reference line passing through the apex of the grooves of the upper and lower rims of the frame in the vertical plane containing the primary direction (DIN ISO 13666:2019, section 3.2.37), where the primary direction is the direction of the line of sight, usually taken to be the horizontal, to an object at an infinite distance measured with habitual head and body posture when looking straight ahead in unaided vision (DIN ISO 13666:2019, section 3.2.25) and the line of sight is the ray path from the point of interest (i.e. point of fixation) in object space to the centre of the entrance pupil of the eye and its continuation in image space from the centre of the exit pupil to the retinal point of fixation (generally the foveola) (DIN ISO 13666:2019, section 3.2.24). Typical values of the as-worn pantoscopic angle lie in the range between -20 and +30 degree. The as-worn face form angle is the horizontal angle between the primary direction and the perpendicular to a reference line passing through the apex of the grooves of the nasal and temporal rims of the frame in the horizontal plane containing the primary direction (DIN ISO 13666:2019, section 3.2.38). Typical values of the as-worn face form angle lie in the range between -5 and +30 degree. The vertex distance is the horizontal distance between the back surface of the spectacle lens and the apex of the cornea, measured with the eyes in the primary position (DIN ISO 13666:2019, section 3.2.40), where the primary position is the position of the eye when looking in the primary direction (DIN ISO 13666:2019, section 3.2.26). Typical valued of the vertex distance lie in the range between 5 mm and 30 mm. The as-worn position may be an individual as-worn position determined for a specific individual or a generic as-worn position determined for a defined group of wearers.

In a particularly preferred embodiment of the kit comprising the spectacle lens according to the first aspect of the present invention and instructions for use including an as-worn position of the spectacle lens, the spectacle lens being configured that the first focal power of the first zone corrects a myopic refractive error of the specific wearer of the spectacle lens being positioned according to the as-worn position completely or partially.

The second aspect of the invention is fully solved by a kit of the above described types.

In a third aspect, the present invention relates to a data set comprising at least one of the following kinds of data:
(i) a numerical representation of the spectacle lens according to the first aspect of the invention configured to use the numerical representation of the spectacle lens for a manufacture of the spectacle lens;
(ii) data containing computer-readable instructions for controlling one or more manufacturing machines to produce a spectacle lens according to the first aspect of the invention.

The term "numerical representation of the spectacle lens" refers to a digital representation of the spectacle lens and is a product of the design or calculating process of the spectacle lens. In other words, if a lens designer finishes the design or calculation process of the spectacle lens, the numerical representation of the spectacle lens is the result of said design or calculating process. Said numerical representation of the spectacle lens is configured to or suitable for manufacturing a spectacle lens. In other words, a manufacturer for spectacle lenses uses said numerical representation of the spectacle lens for producing a physical spectacle lens.

The term "computer-readable instructions" represents an addition or an alternative to the numerical representation of the spectacle lens for controlling one or more manufacturing machines (e.g. casting, grinding, milling, lapping and/or polishing machines) in order to produce a spectacle lens having the respective design or calculating features.

The third aspect of the invention is fully solved by a data set of the above described type.

A fourth aspect of the invention is directed to a computer-implemented method of designing a spectacle lens for the purpose of a use of the design for a manufacture of the spectacle lens, the spectacle lens comprising
- a first zone having a first focal power and
- a second zone having at least one of the following features:
   (i) one or a plurality of focusing structures providing a second focal power greater than the first focal power;
   (ii) diffusing structures leading to a diffusion of light passing the second zone.

As generally used, the term "computer-implemented method" refers to a method which involves a programmable apparatus, in particular, a computer, a computer network, a processing device, such as comprised by a mobile communication device, or a readable medium carrying a program.

In the context of the present invention, the term "representation of a spectacle lens" refers to an implementation of a spectacle lens having the respective design features (physical representation of the spectacle lens) or to a numerical data set describing the design features (numerical representation of the spectacle lens). For example, such a data set may be stored in a memory of a computer or on a computer-readable (particularly non-transitory) storage medium. In addition, the data set may be retrievable from a data network like, for example, the internet or a local area network (LAN). A dataset resembling a representation of a progressive spectacle lens may include, in particular, a description of the geometric shape and the medium of the progressive spectacle lens. Such a description can e.g. include a mathematical description of the front surface, the rear surface, the arrangement of these surfaces in relation to one another (including the thickness) and the edge delimitation of the progressive spectacle lens as well as the refractive index distribution of the medium of which the progressive lens is to be made. The representation can be in coded or even in encrypted form. The term medium here means the material(s) or the substance the spectacle lens is made of. The representation of the progressive spectacle lens may in addition or alternatively include computer-readable instructions for controlling one or more manufacturing machines (e.g. casting, grinding, milling, lapping and/or polishing machines) in order to produce a physical spectacle lens having the respective design features.

According to the invention, the computer-implemented method of calculating a spectacle lens contains at least one step of the following two steps:
(a) calculating a third zone between and directly adjacent to the first zone and the second zone, such that the third zone contains at least one of the following:
   (i) focusing structures providing a third focal power, whereby if said second zone comprising said focusing structures an average focal power of said focusing structures of said second zone differs from an average focal power of said focusing structures of said third zone;
   (ii) diffusing structures leading to a diffusion of light passing the third zone, whereby if said second zone comprising said diffusing structures, said diffusing structures of said second zone differ from said diffusing structures of said third zone;
(b) calculating said first zone and said second zone as being strip-shaped having linear edges, whereby said linear edges of said first zone defining a first width and said linear edges of said second zone defining a second width, whereby a variation of said first width and a variation of said second width being less than at least one of the variations of the group consisting of:
   (i) the variation of said first width is less than 5 % and the variation of said second width is less than 5 %;
   (ii) the variation of said first width is less than 3 % and the variation of said second width is less than 3 %;
   (iii) the variation of said first width is less than 2 % and the variation of said second width is less than 2 %.

The design is calculated for the purpose of a use of the design for a manufacture of the spectacle lens.

In the inventive computer-implemented method for calculating an inventive spectacle lens, the first zone represents a clear area having a first focal power that is preferably based on a prescription for correcting an abnormal refraction of an eye. The second zone contains defocusing structures and/or diffusing structures.

With the inventive computer-implemented method for designing, respectively calculating an inventive spectacle lens, which includes a third zone between and directly adjacent to the first zone and to the second zone, a wearer of the spectacle lens is not or at least less disturbed by the second and/or by the third zone of the spectacle lens appearing blurred. The third zone ensures that the change of the myopic defocus and/or the change of the average transferred contrast from the first zone to the second zone is smoothed. Hence, the discomfort for the wearer of wearing the inventive myopia reducing spectacle lens is reduced as compared to myopia reducing spectacle lenses according to the state of the art while the myopia progression controlling functionality is maintained.

With the inventive computer-implemented method for calculating an inventive spectacle lens, which includes a first zone being strip-shaped having linear edges and a second zone being strip-shaped having linear edges, said inventive lens, enables a manufacturing of the spectacle lens within feasible manufacturing tolerances. Hence the discomfort of wearing of the inventive myopia reducing spectacle lenses, manufactured within feasible manufacturing tolerances, is reduced as compared to myopia reducing spectacle lenses according to the state of the art while the myopia progression controlling functionality is maintained.

The fourth aspect of the invention is fully solved by a computer-implemented method for calculating/designing an inventive spectacle lens of the above described type.

In a fifth aspect the invention comprising a computer program code for carrying out all method steps according to the fourth aspect of the invention when the computer program is loaded in a computer and/or executed in a computer; and being stored on a non-transitory computer-readable data carrier and/or being embodied as a data carrier signal.

The fifth aspect of the invention is fully solved by a computer-implemented method for calculating/designing an inventive spectacle lens of the above described type.

In a sixth aspect of the invention, a method of manufacturing a spectacle lens comprising
- a first zone having a first focal power and
- a second zone having at least one of the following features:
   (i) one or a plurality of focusing structures providing a second focal power greater than the first focal power;
   (ii) diffusing structures leading to a diffusion of light passing the second zone
is provided.

According to the invention, the method of manufacturing a spectacle lens contains at least one step of the following two steps:
(a) forming a third zone between and directly adjacent to the first zone and the second zone, wherein the third zone contains at least one of the following:
   (i) focusing structures providing a third focal power, whereby if said second zone comprising said focusing structures an average focal power of said focusing structures of said second zone differs from an average focal power of said focusing structures of said third zone;
   (ii) diffusing structures leading to a diffusion of light passing the third zone, whereby if said second zone comprising said diffusing structures said diffusing structures of said second zone differ from said diffusing structures of said third zone;
(b) forming said first zone and said second zone being strip-shaped having linear edges, whereby said linear edges of said first zone defining a first width and said linear edges of said second zone defining a second width, whereby a variation of said first width and a variation of said second width being less than at least one of the variations of the group consisting of:
   (i) the variation of said first width is less than 5 % and the variation of said second width is less than 5 %;
   (ii) the variation of said first width is less than 3 % and the variation of said second width is less than 3 %;
   (iii) the variation of said first width is less than 2 % and the variation of said second width is less than 2 %.

The first zone represents a clear area having a first focal power that is preferably based on a prescription for correcting an abnormal refraction of an eye. The second zone contains defocusing structure(s) and/or diffusing structure(s).

A wearer of a spectacle lens is not or at least less disturbed by the second and/or by the third zone of the spectacle lens appearing blurred if the spectacle lens is manufactured according to the fourth aspect of the invention. The at least one third zone ensures that the change of the myopic defocus and/or the change of the average transferred contrast from the at least one first zone to the at least one second zone is smoothed. Hence, the discomfort for the wearer is reduced as compared to the state of the art while the myopia progression controlling functionality is maintained.

The sixth aspect of the invention is fully solved by method for manufacturing a spectacle lens of the above described type.

With respect to the prior art, the invention exhibits the following advantages.

A wearer of a spectacle lens based on the inventive spectacle lens design is not or at least less disturbed by the at least one second and/or by the at least one third zone of the spectacle lens appearing blurred. Hence, the discomfort of wearing myopia reducing spectacle lenses based on the inventive spectacle lens design is reduced as compared to myopia reducing spectacle lenses according to the state of the art while the myopia progression controlling functionality is maintained.

This invention enables a manufacturing of a spectacle lens according to the inventive lens design within feasible manufacturing tolerances. Hence the discomfort of wearing myopia reducing spectacle lenses, manufactured within feasible manufacturing tolerances, based on the inventive spectacle lens design is reduced as compared to myopia reducing spectacle lenses according to the state of the art while the myopia progression controlling functionality is maintained.

The myopia progression controlling functionality can be maintained for different wearing situations and the level of comfort of a wearer is adjusted to the sensitivity of the wearer's eyes.

As used herein, the terms "have", "comprise" or "include" or any arbitrary grammatical variation thereof are used in a non-exclusive way. Thus, these terms may refer to both a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

As further used herein, the terms "preferably", "more preferably", "particularly", "more particularly", or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in this way with other features of the invention.

### Short description of the figures

Further features, properties and advantages of the present invention will become clear from the following description of exemplary embodiments of the invention in conjunction with the accompanying drawings.
Figure 1 shows a first exemplary embodiment of a spectacle lens with a vertical orientation of the first zone, the second zone and the third zone.
Figure 2 shows a second exemplary embodiment of a spectacle lens with a vertical orientation of the first zone and the second zone, both zones beeing strip-shaped having linear edges.
Figure 3 shows a third exemplary embodiment of a spectacle lens with an oblique orientation of the first zone, the second zone and the third zone.
Figure 4 shows a flow chart representing an exemplary embodiment for a method of manufacturing a spectacle lens.
Figure 5 shows an exemplary embodiment of a spectacle with two identical spectacle lenses according to the invention.
Figure 6 shows an exemplary embodiment of a spectacle with two different spectacle lenses according to the invention.
Figure 7 shows an exemplary embodiment of a spectacle with a spectacle lens according to the invention.

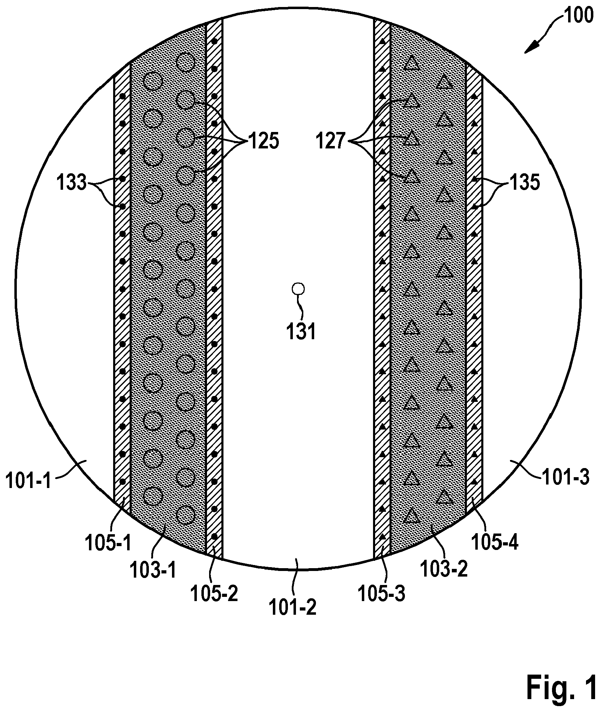

Exemplary embodiments of spectacle lenses based on the inventive lens will be described with respect to Figures 1 to 3. The spectacle lenses 100 to 300 of the exemplary embodiments each include a first zone 101 to 301, a second zone 103 to 303 and at third zone 105 to 305.

However, the locations and the geometries of all first, second and third zones described in the exemplary embodiments are not exhaustive. A person skilled will envisage further possible locations, geometries and feature combinations disclosed within this invention.

A first exemplary embodiment of the inventive spectacle lens will be described with respect to Figure 1 which shows a spectacle lens 100 in a plan view. The spectacle lens 100 is designed to be positioned relative to the eye of a wearer according to a given as-worn position. The spectacle lens 100 shows three first zones 101-1 to 101-3 which all have the same first focal power that is designed to provide a focused image on the foveal zone of the retina of the wearer's eyes. The first zone 101-2 comprises the center of the spectacle lens 131. In other embodiments, more or less than three first zones 101 are feasible.

Moreover, the exemplary embodiment shown in Figure 1 includes two second zones 103. The first second zone 103-1 (left in Figure 1) contains focusing structures 125 providing a second focal power resulting in a myopic defocus when the spectacle lens 100 is positioned according to the pre-defined as-worn position. The focusing structures 125 are calculated and fabricated to be identical in shape and to provide the same focal power exceeding the value of the focal power of the first zone 101. The second second zone 103-2 (right in Figure 1) contains a plurality of diffusing structures 127 leading to a diffusion of light passing the second second zone 103-2, resulting in a reduction of average transferred contrast. In other embodiments, more or less than two second zones are feasible and said second zones can obtain (i) only focusing structures, (ii) only diffusing structures or (iii) any possible combination of focusing structures and diffusing structures. A combination of focusing structures and diffusing structures is also within the same second zone possible.

The second zones 103-1 and 103-2 of the exemplary embodiment in Figure 1 are designed in such a way, that the area of the first second zone 103-1 and the area of the second second zone 103-2 each cover 15 % of the area of the spectacle lens 100. The area of the first second zone 103-1 is covered 25 % by focusing structures 125 only. The area of the second second zone 103-2 is covered 25 % by diffusing structures 127 only.

Moreover, the spectacle lens 100 in Figure 1 shows four third zones 105 between and directly adjacent to the first zones 101 and the second zones 103. The third zones 105-1 and 105-2 comprise focusing structures 133 (e.g. third zone directly adjacent to the left second zone 103-1 in Figure 1) providing one third focal power resulting in a myopic defocus of the spectacle lens. The focusing structures 133 of said third zones 105-1 and 105-2 in this exemplary embodiment comprise the same third focal power. In other embodiments the third focal power of the third zones 105-1 and 105-2 can obtain a different third focal power value. Furthermore, the third zones 105-3 and 105-4 comprise diffusing structures 135 (e.g. third zone directly adjacent to the right second zone 103-2 in Figure 1) leading to a diffusion of light passing the third zones 105-3 and 105-4, resulting in a reduction of average transferred contrast for the wearer. The diffusing structures 135 of the third zones 105-3 and 105-4 in this exemplary embodiment lead to the same reduction of average transferred contrast. In other embodiments the diffusing structures 135 of the third zones 105-3 and 105-4 can lead to a varying reduction of average transferred contrast for each of the third zones 105-3 and 105-4.

The four third zones 105-1 to 105-4 of the exemplary embodiment in Figure 1 are designed in such a way, that the area of each third zone 105 covers 5 % of the area of the spectacle lens 100. The area of the first third zone 105-1 and the area of the second third zone 105-2 are each covered 20% by focusing structures 133. The area of the third third zone 105-3 and the area of the fourth third zone 105-4 are each covered 20% by diffusing structures 135.

The exemplary embodiment in Figure 1 shows a spectacle lens 100 containing three zones. The area of the spectacle lens 100 is 50 % covered by the first zones 101, 30 % covered by the second zones 103 and 20 % covered by the third zones 105.

A second exemplary embodiment of the inventive spectacle lens 200 will be described with respect to Figure 2. Figure 2a shows a second exemplary embodiment of a spectacle lens with a vertical orientation of the first zone and the second zone, both zones beeing strip-shaped having linear edges. Figure 2b shows how the area and the width of a second zone is determined.

A second exemplary embodiment of the inventive spectacle lens will be described with respect to Figure 2a which shows a spectacle lens 200 in a plan view. The spectacle lens 200 is designed to be positioned relative to the eye of a wearer according to a given as-worn position. The spectacle lens 200 shows three first zones 201-1 to 201-3 which all have the same first focal power that is designed to provide a focused image on the foveal zone of the retina of the wearer's eyes. The first zone 201-2 comprises the center of the spectacle lens 231. In other embodiments, more or less than three first zones 101 are feasible.

Moreover, the exemplary embodiment shown in Figure 2a includes two second zones 203. The first second zone 203-1 (left in Figure 2a) contains focusing structures 225 providing a second focal power resulting in a myopic defocus when the spectacle lens 200 is positioned according to the pre-defined as-worn position. The focusing structures 225 are calculated and fabricated to be identical in shape and to provide the same focal power exceeding the value of the focal power of the first zone 201. The second second zone 203-2 (right in Figure 2a) contains a plurality of diffusing structures 227 leading to a diffusion of light passing the second second zone 203-2, resulting in a reduction of average transferred contrast. In other embodiments, more or less than two second zones are feasible and said second zones can obtain (i) only focusing structures, (ii) only diffusing structures or (iii) any possible combination of focusing structures and diffusing structures. A combination of focusing structures and diffusing structures is also within the same second zone possible.

The second zones 203-1 and 203-2 of the exemplary embodiment in Figure 2a are designed in such a way, that the variation of the second widths 209-1 and 209-2 is less than 5 %. The second width 209-1 of the first second zone 203-1 is determined by the variation of the second width 209-1 a at the top part and the second width 209-1 b at the bottom part of the lens 200 as shown in Figure 2a. In this exemplary embodiment the width 209-1 b at the bottom part of the lens 200 is smaller than the width 209-1 a at the top part of the lens 200. This results in a variation of the second width 209-1 of 4%. The second width 209-2 of the second second zone 203-2 is determined by the variation of the second width 209-2a at the top part and the second width 209-2b at the bottom part of the lens 200 as shown in Figure 2a. In this exemplary embodiment the width 209-2b at the bottom part of the lens 200 is smaller than the width 209-2a at the top part of the lens 200. This results in a variation of the second width 209-2 of 4%.

The determination of the second widths 209-1 and 209-2 is based on the linear edges 229-1 to 229-4. Fig 2b shows a cross-sectional view A-A of the spectacle lens 200 shown in Fig. 2a.

The front surface 241 and the back surface 243 of the spectacle lens 200 are spherically shaped. Within the scope of this invention the shape of the front surface 241 and the back surface 243 of the spectacle lens 200 is not limited to a spherical shape, it also can be of aspherical, toroidal, atoric or even be freely formed in order to comply with wearer's individual needs.

Figure 2b demonstrates how to determine the inner onsets io229-1 and io229-2 of a circular-shaped focusing structure 225 and the outer onset oo229-1 and oo229-2 of a circular-shaped focusing structure 225. Moreover, Figure 2b demonstrates how to determine the inner onsets io229-3 and io229-4 of a diffusing structure 227 and the outer onset oo229-3 and oo229-4 of a diffusing structure 227.

The determination of an inner onset and an outer onset of a circular-shaped focusing structure is explained exemplary with the circular-shaped focusing structure 225-2. The inner onset io229-2 of the circular-shaped focusing structure 225-2 is a point directly adjacent to the first zone 201-2. The outer onset oo229-2 of the circular-shaped focusing structure 225-2 is a point further placed from the first zone 201-2. The inner onset io229-2 of the focusing structure 225-2 represents the first measureable inner position (measured from the optical center of the spectacle lens 231) of the focusing structure 225-2. In other words, the inner onset io229-2 represents the position on the surface of the spectacle lens on which the surface shape of the spectacle lens 200 starts to deviate from the shape of the base lens surface 241. The inner onset io229-1 and the outer onset oo229-1 of the focusing structure 225-1 are determined accordingly to the inner onset io229-2 and the outer onset oo229-2 of the focusing structure 225-2.

The second zone 203-1 is defined by the linear edges 229-1 and 229-2. Two inner onsets with an equal distance to the center of the spectacle lens 231, said distance being the nearest for a focusing structure, defining the linear edge 229-2 by connecting these inner onsets. Two outer onsets with an equal distance to the center of the spectacle lens 231, said distance defining the linear edge 229-1 by connecting these outer onsets.

The determination of an inner onset and an outer onset of a diffusing structure is explained exemplary with the diffusing structure 227-2. The inner onset io229-3 of the diffusing structure 227-2 is a point directly adjacent to the first zone 201-2. The outer onset oo229-3 of the diffusing structure 227-2 is a point further placed from the first zone 201-2. The inner onset io229-3 of the diffusing structure 227-2 represents the first measureable inner position (measured from the optical center of the spectacle lens 231) of the diffusing structure 227-2. In other words, the inner onset io229-3 represents the position on the surface of the spectacle lens on which the surface shape of the spectacle lens 200 starts to deviate from the shape of the base lens surface 241. The inner onset io229-4 and the outer onset oo229-4 of the diffusing structure 227-1 are determined accordingly to the inner onset io229-3 and the outer onset oo229-3 of the diffusing structure 227-2.

The second zone 203-2 is defined by the linear edges 229-3 and 229-4. Two inner onsets with an equal distance to the center of the spectacle lens 231, said distance being the nearest for a diffusing structure, defining the linear edge 229-4 by connecting these inner onsets. Two outer onsets with an equal distance to the center of the spectacle lens 231, said distance defining the linear edge 229-4 by connecting these outer onsets.

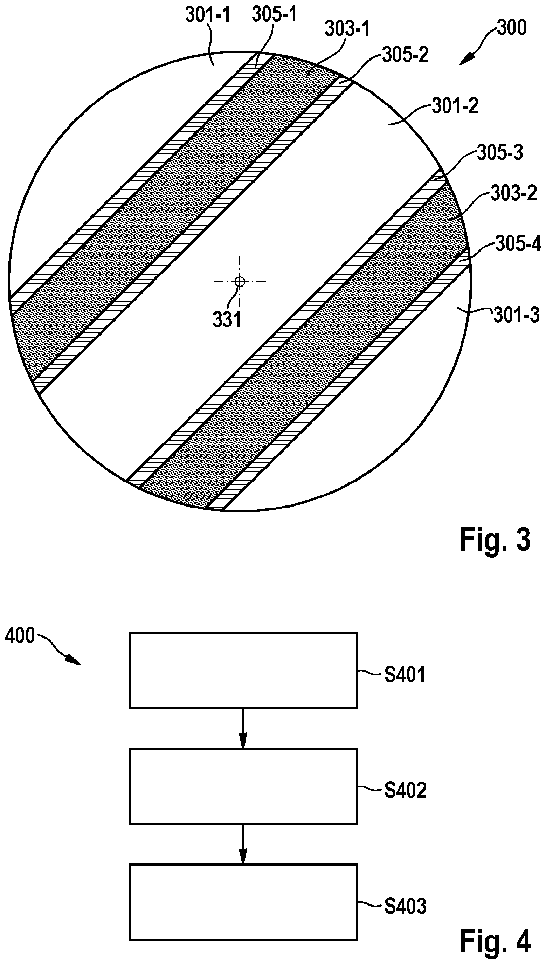

A third exemplary embodiment of the inventive spectacle lens 300 will be described with respect to Figure 3 which shows a spectacle lens 300 according to the invention in a plan view.

Figure 3 shows a spectacle lens 300 comprising three first zones 301-1 to 301-3, two second zones 303-1 and 303-2 and four third zones 305-1 to 305-4. The first and second zones comprise an oblique orientation between each other. The oblique orientation between the first zones 301 and the second zones 303 comprises in this exemplary embodiment an orientation angle of 45° towards a horizontal of the spectacle lens. In this exemplary embodiment, the horizontal is part of the center of the spectacle lens 131. In a further embodiment of the inventive spectacle lens the oblique orientation between the first zones and the second zones may correspond to an orientation angle of 0° which is synonymous with a perfectly horizontal orientation between the first zones and the second zones.

Moreover, the spectacle lens 300 shown in Figure 3 comprises three first zones 301-1 to 301-3, said first zones 301 all comprise the same first focal power, that provides a focused image on the foveal zone of the retina of the wearer's eyes. In this exemplary third embodiment the said first focal power corresponds to -5,0 D.

Figure 3 shows a spectacle lens 300 comprising two second zones 303-1 and 303-2 and four third zones 305-1 to 305-4. Said second zones 303-1 and 303-2 and said third zones 305-1 to 305-4 are optical zones that are characterized by different focal power compared to said first focal power of the first zones 301-1 to 301-3. In this exemplary third embodiment the focal power of the said second zones 303-1 and 303-2 and said third zones 305-1 to 305-4 correspond to -3,0 D.

Figure 4 shows a flow chart of a method of manufacturing a spectacle lens according to the invention.

In a first step, S401, data from a prescription is received where the prescription includes a summary of the dioptric powers necessary for correcting a diagnosed refractive error. In case of a myopic eye the prescription contains at least a value "sph" for sphere. In addition, in case of an additional astigmatism it may also contain values for "cyl" for cylinder and a value "axis" for the axis of the cylinder. Further values may also present in the prescription like, for example a prism value. In this exemplary embodiment the second zone shall provide a myopic defocus. Hence, the prescription also contains a value for an additional second focal power, which shall be used for providing the myopic defocus. However, in the present exemplary embodiment focusing structures are provided in a second zone.

In the present exemplary embodiment, the values contained in the prescription are based on a measurement performed by an eye care professional with a patient, where the measurement provides for refraction data relating to the eyes of the patient. The refraction data may either be objective refraction data, i.e. refraction data measured objectively by means of a refractometer or the like, or subjective refraction data. In case of subjective refraction data, this data may be collected by letting the patient look at a text or at optotypes with different sizes while trying various test lenses until the patient experiences a satisfying visual acuity.

Based on the measured data received in step S401, a single vision spectacle lens with a focal power of-5,0 D that provides a focused image on the fovea (without accommodation) when the wearer looks through the spectacle lens worn according to an as-worn position is provided by means of a suitable process in step S402. Suitable processes can, for example be molding processes or a machining processes. If a machining process is used, the single vision lens can, for example, be manufactured from a semi-finished blank, which includes an already (a) finished front surface or (b) finished back surface. The (a) non-finished back surface or (b) non-finished front surface of the semifinished blank is then machined so that the semi-finished blank becomes the single vision spectacle lens with the requested first focal power.

In step S403, focusing structures providing a second focal power of -2,0 D, resulting in a myopic defocus, are introduced into a zone of the single vision spectacle lens which shall become a second zone. The focusing structures are introduced such into the single vision spectacle lens that the generated second zone at least partly surrounds a first zone without focusing structures. Hence, said first zone allows for clear vision with the a first focal power of -5,0 D. Said first focal power provides a focused image on the fovea. In other words, shape and size of the first zone are defined by the shape and size of the second zone.

In this exemplary embodiment, the second zone is particulary introduced in such a way, that a third zone between the first zone and the second zone is created. Said third zone contains focusing structures providing a third focal power of-3,0 D. Said third focal power resulting in a myopic defocus which is less strong than the myopic defocus resulting from the second focal power. This results in a smoother gradient from the focal power of the first zone towards the focal power of the second zone.

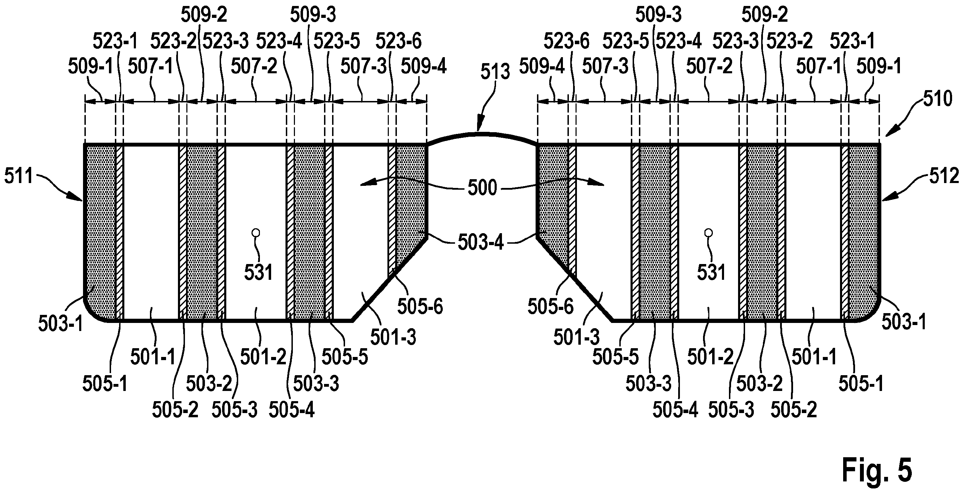

Further exemplary embodiments of the spectacle lens based on the inventive lens will be described with respect to Figures 5 to 7.

Figure 5 shows an exemplary embodiment of a spectacle 510 with two spectacle frames 511 and 512 and two identical spectacle lenses 500. The spectacle frames 511 and 512 are connected by a bridge 513. In the further description of this exemplary embodiment only the left spectacle lens 500 will be described in detail. All the features are also present for the right spectacle lens 500.

The spectacle lens 500 comprising three first zones 501-1 to 501-3, four second zones 503-1 to 503-4 and six third zones 505-1 to 505-6. The first and second zones comprise a vertical orientation between each other.

All the first zones 501-1 to 501-3 comprise a first width 507-1 to 507-3. In this exemplary embodiment all the first widths 507 comprise the same value. All second zones 503-1 to 503-4 comprise a second width 509-1 to 509-4. In this exemplary embodiment all the second widths 509 comprise the same value. All third zones 505-1 to 505-6 comprise a third width 523-1 to 523-6. In this exemplary embodiment all the third widths 523 comprise the same value.

The first zones 501-2 of the left and the right lens comprise a center of the spectacle lens 531 and a first focal power which comprises the same value for all first zones 501-1 to 501-3. Moreover, the exemplary embodiment shown in Figure 5 includes four second zones 503. All second zones 503-1 to 503-4 contain focusing structures (not shown in Fig. 5) providing a second focal power resulting in a myopic defocus when the spectacle lens 500 is positioned according to the pre-defined as-worn position. The focusing structures of the second zones 503 are calculated and fabricated to be identical in shape and to provide the same focal power exceeding the value of the focal power of the first zones 501. In another embodiment the second zones 503-1 to 503-4 can contain a plurality of diffusing structures leading to a diffusion of light passing the second zones 503, resulting in a reduction of average transferred contrast.

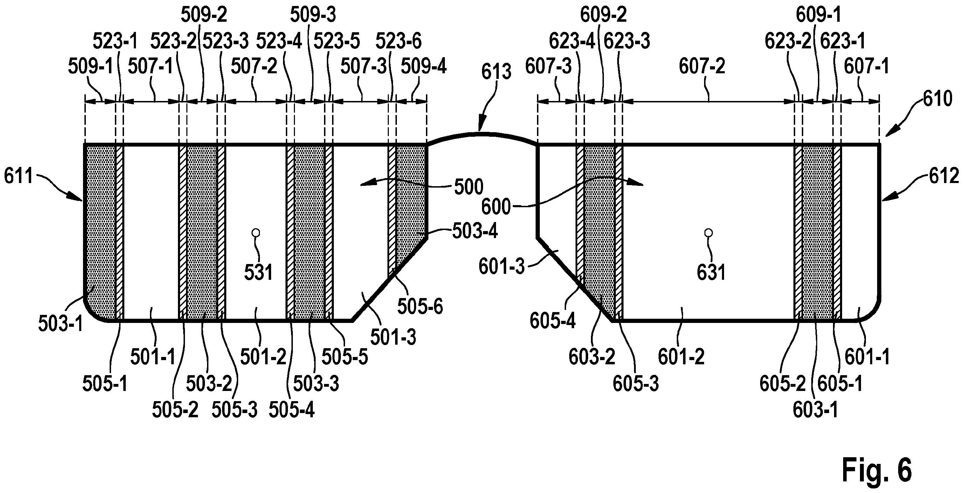

Figure 6 shows an exemplary embodiment of a spectacle 610 with two spectacle frames 611 and 612 and two different spectacle lenses 500 and 600. The spectacle frames 611 and 612 are connected by a bridge 613. In the further description of this exemplary embodiment only the right spectacle lens 600 will be described in detail. All the features regarding the left spectacle lens 500 are identical with the features described in Figure 5 for the left spectacle lens 500.

The spectacle lens 600 comprising three first zones 601-1 to 601-3, two second zones 603-1 to 603-2 and four third zones 605-1 to 605-4. The first and second zones comprise a vertical orientation between each other.

All the first zones 601-1 to 601-3 comprise a first width 607-1 to 607-3. In this exemplary embodiment the first widths 607-1 and 607-3 comprise the same value. The width 607-2 of the second first zone 601-2 comprises a value which is 4 times greater than the value of the first widths 607-1 and 607-3.

All second zones 603-1 and 603-2 comprise a second width 609-1 and 609-2. In this exemplary embodiment all the second widths 609 comprise the same value. All third zones 605-1 to 605-4 comprise a third width 623-1 to 623-4. In this exemplary embodiment all the third widths 623 comprise the same value.

The first zones 501-2 of the left and the first zones 601-2 of the right lens comprise a center of the spectacle lens 531, 631 and a first focal power which comprises the same value for all first zones 501 and all first zones 601.

Moreover, the exemplary embodiment shown in Figure 6 includes two second zones 603. All second zones 603-1 to 603-2 contain focusing structures (not shown in Fig. 6) providing a second focal power resulting in a myopic defocus when the spectacle lens 600 is positioned according to the pre-defined as-worn position. The focusing structures of the second zones 603 are calculated and fabricated to be identical in shape and to provide the same focal power exceeding the value of the focal power of the first zones 601. In another embodiment the second zones 603-1 to 603-2 can contain a plurality of diffusing structures leading to a diffusion of light passing the second zones 603, resulting in a reduction of average transferred contrast.

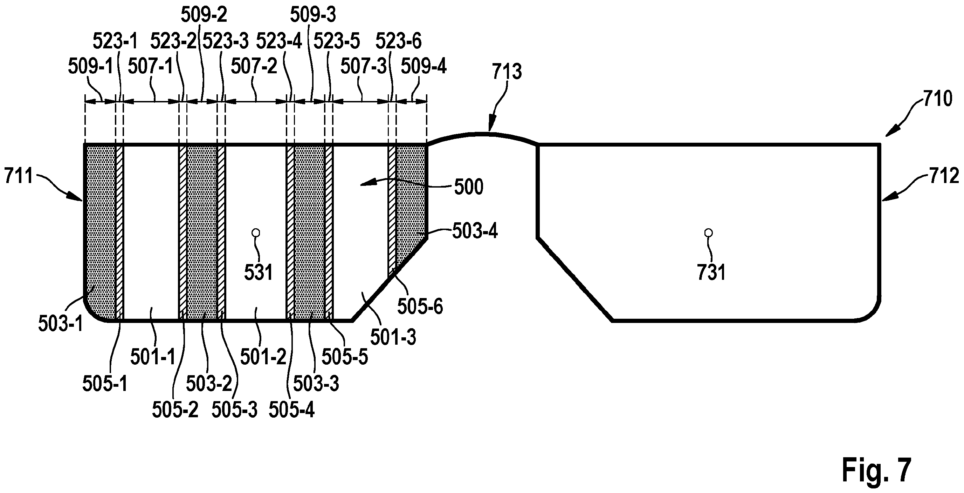

Figure 7 shows an exemplary embodiment of a spectacle 710 with two spectacle frames 711 and 712 and two different spectacle lenses 500 and 700. The spectacle frames 711 and 712 are connected by a bridge 713. In the further description of this exemplary embodiment only the right spectacle lens 700 will be described in detail. All the features regarding the left spectacle lens 500 are identical with the features described in Figure 5 for the left spectacle lens 500.

The spectacle lens 700 comprising one first zone 701 and no second zones and no third zones. In other words, only the spectacle lens 500 on the left side is feasible for realizing a well balance between the myopia control function and the wearing comfort for the wearer.

Moreover, the exemplary embodiment shown in Figure 7 comprises a center of the spectacle lens 731.

## Claims

1. A spectacle lens (100, 200, 300, 500, 600) comprising
- a first zone (101, 201, 301, 501, 601) having a first focal power and
- a second zone (103, 203, 303, 503, 603) having at least one of the following features:
(i) one or a plurality of focusing structures (125, 225) providing a second focal power greater than the first focal power;
(ii) diffusing structures (127, 227) leading to a diffusion of light passing the second zone (103, 203, 303, 503, 603)
**characterized in** at least one feature of the following two features:
(a) a third zone (105, 305, 505, 605) between and directly adjacent to the first zone (101, 201, 301, 501, 601) and the second zone (103, 203, 303, 503, 603), wherein the third zone (105, 305, 505, 605) contains at least one of the following:
(i) focusing structures (133) providing a third focal power, whereby if said second zone (103, 203, 303, 503, 603) comprising said focusing structures (125, 225) an average focal power of said focusing structures (125, 225) of said second zone (103, 203, 303, 503, 603) differs from an average focal power of said focusing structures (133) of said third zone (105, 305, 505, 605);
(ii) diffusing structures (135) leading to a diffusion of light passing the third zone (105, 305, 505, 605), whereby if said second zone (103, 203, 303, 503, 603) comprising said diffusing structures (127, 227) said diffusing structures (127, 227) of said second zone (103, 203, 303, 503, 603) differ from said diffusing structures (135) of said third zone (105, 305, 505, 605);
(b) said first zone (101, 201, 301, 501, 601) and said second zone (103, 203, 303, 503, 603) being strip-shaped having linear edges (229), whereby said linear edges (229) of said first zone (101, 201, 301, 501, 601) defining a first width (207, 507, 607) and said linear edges (229) of said second zone (103, 203, 303, 503, 603) defining a second width (209, 509, 609), whereby a variation of said first width (207, 507, 607) and a variation of said second width (209, 509, 609) being less than at least one of the variations of the group consisting of:
(i) the variation of said first width (507, 607, 707) is less than 5 % and the variation of said second width (209, 509, 609) is less than 5 %;
(ii) the variation of said first width (207, 507, 607) is less than 3 % and the variation of said second width (209, 509, 609) is less than 3 %;
(iii) the variation of said first width (207, 507, 607) is less than 2 % and the variation of said second width (209, 509, 609) is less than 2 %.

2. The spectacle lens (100, 200, 300, 500, 600) according to claim 1, **characterized in that** an area of the second zone (103, 203, 303, 503, 603) and/or in case of the spectacle lens (100, 200, 300, 500, 600) comprising the third zone (105, 305, 505, 605), an area of the third zone (105, 305, 505, 605) covers at least 5.0 % of an area of the spectacle lens (100, 200, 300, 500, 600).

3. The spectacle lens (100, 200, 300, 500, 600) according to the preceding claim, **characterized in that** the focusing structures (125, 133) and/or the diffusing structures (127, 135) of the second zone (103, 203, 303, 503, 603) and/or the third zone (105, 305, 505, 605) in case of the spectacle lens (100, 200, 300, 500, 600) comprising the third zone (105, 305, 505, 605), cover at least 5% of the area of said second zone (103, 203, 303, 503, 603) and/or of the area of said third zone (105, 305, 505, 605).

4. The spectacle lens (100, 200, 300, 500, 600) according to one of the preceding claims, **characterized in that** the first width (207, 507, 607) of the first zone (101, 201, 301, 501, 601) comprises a value out of a value range of 0.75 mm to 24.0 mm and the second width (209, 509, 609) of the second zone (103, 203, 303, 503, 603) comprises a value out of a value range of 0.0375 mm to 12.0 mm and/or in case of the spectacle lens (100, 200, 300, 500, 600) comprising the third zone (105, 305, 505, 605), the third zone (105, 305, 505, 605) having a third width (523, 623), wherein the third width (523, 623) of the third zone (105, 305, 505, 605) comprises a value out of a value range of 0.0375 mm to 12.0 mm.

5. The spectacle lens (100, 200, 300, 500, 600) according to one of the preceding claims, **characterized in that** (i) a fitting point being located on the first zone (101, 201, 301, 501, 601) or that (ii) an optical center of the spectacle lens (131, 231, 331, 531, 631) being located on the first zone (101, 201, 301, 501, 601).

6. The spectacle lens (100, 200, 300, 500, 600) according to one of the preceding claims, **characterized in that** the first focal power of the first zone (101, 201, 301, 501, 601) comprises a value out of a value range of -15.0 D to +2.0 D and the second focal power of the second zone (103, 203, 303, 503, 603) and the third focal power of the third zone (105, 305, 505, 605) comprising a focal power value which differs in respect to the first focal power out of a value range of + 0.5 D to + 5.0 D.

7. The spectacle lens (100, 200, 300, 500, 600) according to one of the preceding claims, **characterized in that** the linear edges (229) of the first zone (101, 201, 301, 501, 601) and the second zone (103, 203, 303, 503, 603) are oriented at an orientation angle (133) to a predefined horizontal of the spectacle lens (100, 200, 300, 500, 600).

8. Kit comprising the spectacle lens (100, 200, 300, 500, 600) according to one of the claims 1 to 7 and instructions for use including an as-worn position of the spectacle lens (100, 200, 300, 500, 600), **characterized in that** the linear edges (229) of the first zone (101, 201, 301, 501, 601) and the second zone (103, 203, 303, 503, 603) are oriented at an angle to a horizontal when the spectacle lens (100, 200, 300, 500, 600) is positioned according to the as-worn position.

9. Kit comprising the spectacle lens (100, 200, 300, 500, 600) according to one of claims 1 to 7 and instructions for use including an as-worn position of the spectacle lens (100, 200, 300, 500, 600) for a specific wearer, **characterized in that** the spectacle lens (100, 200, 300, 500, 600) being configured that the first focal power of the first zone (101, 201, 301, 501, 601) corrects a myopic refractive error of the specific wearer of the spectacle lens (100, 200, 300, 500, 600) being positioned according to the as-worn position completely or partially.

10. A data set comprising at least one kind of the following kinds of data:
(i) a numerical representation of the spectacle lens (100, 200, 300, 500, 600) as claimed in one of the claims 1 to 7 configured to use the numerical representation of the spectacle lens (100, 200, 300, 500, 600) for a manufacture of the spectacle lens (100, 200, 300, 500, 600);
(ii) data containing computer-readable instructions for controlling one or more manufacturing machines to produce a spectacle lens (100, 200, 300, 500, 600) according to one of the claims 1 to 7.

11. A computer-implemented method of designing a spectacle lens (100, 200, 300, 500, 600) for the purpose of a use of the design for a manufacture of the spectacle lens (100, 200, 300, 500, 600), the spectacle lens (100, 200, 300, 500, 600) comprising
- a first zone (101, 201, 301, 501, 601) having a first focal power and
- a second zone (103, 203, 303, 503, 603) having at least one of the following features:
(i) one or a plurality of focusing structures (125, 225) providing a second focal power greater than the first focal power;
(ii) diffusing structures (127, 227) leading to a diffusion of light passing the second zone (103, 203, 303, 503, 603)
**characterized in** at least one step of the following two steps:
(c) calculating a third zone (105, 305, 505, 605) between and directly adjacent to the first zone (101, 201, 301, 501, 601) and the second zone (103, 203, 303, 503, 603), such that the third zone (105, 305, 505, 605) contains at least one of the following:
(i) focusing structures (133) providing a third focal power, whereby if said second zone (103, 203, 303, 503, 603) comprising said focusing structures (125, 225) an average focal power of said focusing structures (125, 225) of said second zone (103, 203, 303, 503, 603) differs from an average focal power of said focusing structures (133) of said third zone (105, 305, 505, 605);
(ii) diffusing structures (135) leading to a diffusion of light passing the third zone (105, 305, 505, 605), whereby if said second zone (103, 203, 303, 503, 603) comprising said diffusing structures (127, 227) said diffusing structures (127, 227) of said second zone (103, 203, 303, 503, 603) differ from said diffusing structures (135) of said third zone (105, 305, 505, 605);
(d) calculating said first zone (101, 201, 301, 501, 601) and said second zone (103, 203, 303, 503, 603) as being strip-shaped having linear edges (229), whereby said linear edges (229) of said first zone (101, 201, 301, 501, 601) defining a first width (207, 507, 607) and said linear edges (229) of said second zone (103, 203, 303, 503, 603) defining a second width (209, 509, 609), whereby a variation of said first width (207, 507, 607) and a variation of said second width (209, 509, 609) being less than at least one of the variations of the group consisting of:
(i) the variation of said first width (207, 507, 607) is less than 5 % and the variation of said second width (209, 509, 609) is less than 5 %;
(ii) the variation of said first width (207, 507, 607) is less than 3 % and the variation of said second width (209, 509, 609) is less than 3 %;
(iii) the variation of said first width (207, 507, 607) is less than 2 % and the variation of said second width (209, 509, 609) is less than 2 %.

12. A computer program having a program code for carrying out all method steps according to claim 11 when the computer program is loaded in a computer and/or executed in a computer; and being stored on a non-transitory computer-readable data carrier and/or being embodied as a data carrier signal.

13. A method (400) of manufacturing a spectacle lens (100, 200, 300, 500, 600) comprising
- a first zone (101, 201, 301, 501, 601) having a first focal power and
- a second zone (103, 203, 303, 503, 603) having at least one of the following features:
(i) one or a plurality of focusing structures (125, 225) providing a second focal power greater ^ than the first focal power;
(ii) diffusing structures (127, 227) leading to a diffusion of light passing the second zone (103, 203, 303, 503, 603)
**characterized in** at least one step of the following two steps:
(c) forming a third zone (105, 305, 505, 605) between and directly adjacent to the first zone (101, 201, 301, 501, 601) and the second zone (103, 203, 303, 503, 603), wherein the third zone (105, 305, 505, 605) contains at least one of the following:
(i) focusing structures (133) providing a third focal power, whereby if said second zone (103, 203, 303, 503, 603) comprising said focusing structures (125, 225) an average focal power of said focusing structures (125, 225) of said second zone (103, 203, 303, 503, 603) differs from an average focal power of said focusing structures (133) of said third zone (105, 305, 505, 605);
(ii) diffusing structures (135) leading to a diffusion of light passing the third zone (105, 305, 505, 605), whereby if said second zone (103, 203, 303, 503, 603) comprising said diffusing structures (127, 227) said diffusing structures (127, 227) of said second zone (103, 203, 303, 503, 603) differ from said diffusing structures (135) of said third zone (105, 305, 505, 605);
(d) said first zone (101, 201, 301, 501, 601) and said second zone (103, 203, 303, 503, 603) being strip-shaped having linear edges (229), whereby said linear edges (229) of said first zone (101, 201, 301, 501, 601) defining a first width (207, 507, 607) and said linear edges (229) of said second zone (103, 203, 303, 503, 603) defining a second width (209, 509, 609), whereby a variation of said first width (207, 507, 607) and a variation of said second width (209, 509, 609) being less than at least one of the variations of the group consisting of:
(i) the variation of said first width (207, 507, 607) is less than 5 % and the variation of said second width (209, 509, 609) is less than 5 %;
(ii) the variation of said first width (207, 507, 607) is less than 3 % and the variation of said second width (209, 509, 609) is less than 3 %;
(iii) the variation of said first width (207, 507, 607) is less than 2 % and the variation of said second width (209, 509, 609) is less than 2 %.
